# EUROPÄISCHE PATENTSCHRIFT

(11) **EP 0 557 294 B1**
(45) Veröffentlichungstag und Bekanntmachung des Hinweises auf die Patenterteilung: **05.07.1995**
(21) Anmeldenummer: 91917466.4
(22) Anmeldetag: 17.10.1991
(51) Int. Cl.: F16K 31/08

(54) **VENTIL**
VALVE
VALVE

(30) Priorität: 16.11.1990 DE 9015711 U; 15.12.1990 DE 4040148
(43) Veröffentlichungstag der Anmeldung: 01.09.1993
(73) Patentinhaber: ASYS AUTOMATIC SYSTEMS GMBH & CO. KG, D-73614 Schorndorf (DE)
(72) Erfinder: HÜGLER, Klaus, D-7060 Schorndorf (DE)
(74) Vertreter: Held, Martin
(86) Internationale Anmeldenummer: DE9100816
(87) Internationale Veröffentlichungsnummer: WO9208919

(56) Entgegenhaltungen:
- EP-A- 0 436 214
- WO-A-82/00604
- DE-A- 2 412 219
- US-A- 3 774 878
- US-A- 4 212 758
- US-A- 4 680 060

## Beschreibung

Die Erfindung betrifft ein Ventil, das die Merkmale des Oberbegriffs des Anspruches 1 aufweist. Ein solches Ventil ist aus US-A-3 774 878 bekannt.

Ein bekanntes Ventil weist den Ventilsitz, in dem der abgewinkelte Einlaßkanal mündet, am Boden einer Sacklochbohrung auf, die in dem einstückig ausgebildeten Ventilgehäuse vorgesehen ist und von der aus in radialer Richtung der Auslaßkanal abgeht. An die offene Seite des Ventilgehäuses ist unter Zwischenlage einer Ringdichtung ein Verbindungsgehäuse angepreßt, das die einen Pneumatikzylinder aufweisende Antriebsvorrichtung koaxial mit dem Ventilgehäuse verbindet. In diesem Verbindungsgehäuse ist konzentrisch zum Ventilsitz ein Gleitlager angeordnet, in dem längsverschiebbar ein stabförmiges Führungs- und Betätigungsglied gelagert ist, welches an seinem einen Ende den Ventilkörper trägt und an seinem anderen Ende mit der Kolbenstange der Antriebsvorrichtung verbunden ist. Als Primärdichtung dient ein metallischer Faltenbalg, welcher das Führungs- und Betätigungsglied im Bereich zwischen dem Ventilkörper und dem Gleitlager umgibt und einerseits dicht mit dem Ventilkörper, andererseits dicht mit dem Ventilgehäuse im Ringdichtungsbereich verbunden ist.

Eine derartige Konstruktion ist mit einer Reihe von Nachteilen behaftet. Die Sicherheit bezüglich eines Austretens von Gas oder Flüssigkeit nach außen ist nur so lange gewährleistet, als der Faltenbalg fehlerfrei ist. Der Faltenbalg ist jedoch einer dynamischen Beanspruchung ausgesetzt, was dessen Lebensdauer erheblich beeinträchtigt. Außerdem ist er in direkter Berührung mit dem Medium, das aggressiv sein kann. Zwar ist bei diesem vorbekannten Ventil im Bereich der Kolbenstange eine Sekundärdichtung angeordnet, in der die Kolbenstange gleitend geführt ist. Die Sekundärdichtung kann aber keine hohen Sicherheitsanforderungen erfüllen. Das Ventil muß deshalb im Bereich des Verbindungsgehäuses ständig darauf hin überwacht werden, ob der Faltenbalg ein Leck hat.
Ferner machen sowohl der Faltenbalg als auch der diesen umgebende Ringraum, der einen Totraum bildet, eine Reinigung des Innenraumes schwierig, weil sowohl der Faltenbalg als auch die Begrenzungswände des ihn umgebenden Innenraumes nicht direkt in der Strömung des Spülmittels liegen und deshalb an deren Oberflächen nicht die erforderliche hohe Strömungsgeschwindigkeit erreicht werden kann, die bei hohen Reinheitsanforderungen erreicht werden muß.
Nachteilig ist weiterhin, daß die Schließkraft, die von der Antriebsvorrichtung zum Schließen des Ventils aufgebracht werden muß, größer ist als die im geschlossenen Zustand aufzubringende Zuhaltekraft, weil der Faltenbalg den effektiven Querschnitt, der bei geöffnetem Ventil druckbeaufschlagt ist, vergrößert. Dies führt zu einem relativ großen Platzbedarf der Antriebsvorrichtung, was beispielsweise beim Einsatz in einem Reinstraum störend ist.

Bei einem bekannten Ventil der eingangs genannten Art (US-A-3 774 878) münden der Einlaßkanal und der Auslaßkanal des Ventilgehäuses in die beiden Endabschnitte einer Hülse, in welcher längsverschiebbar ein Kunststoffkörper angeordnet ist. Dessen einer Endabschnitt ist als Ventilkegel ausgebildet, der gegen einen von der Hülse gebildeten Ventilsitz weist. In axialer Richtung der Hülse verlaufende Führungsrippen, welche an die Außenmantelfläche des sich an den Ventilkegel anschließenden, zylindrischen Abschnittes angeformt sind, stützen sich auf der Innenmantelfläche der Hülse ab und gestatten den Durchtritt des Fluid zwischen der Innenmantelfläche der Hülse und den zwischen den Führungsrippen liegenden Zonen der Außenmantelfläche des Kunststoffkörper, der allseitig einen in ihn eingebetteten Permanentmagneten umschließt. Die Hülse wird von einem Ringmagneten umfaßt, der in einem im Ventilgehäuse in axialer Richtung der Hülse verschiebbar gelagerten und manuell stufenlos verstellbaren Tragkörper festgelegt ist. Ein derartiges Ventil vermag hohe Sicherheits- und Reinheitsanforderungen nicht zu erfüllen, weil die Innenwand der Hülse und die an ihr anliegenden Führungsrippen einem Verschleiß ausgesetzt sind. die Reibung zwischen den Führungsrippen und der Hülse kann relativ groß sein, weil die unvermeidbare Exzentrizität des Magnetsystems zu erheblichen Radialkräften führen kann. Die Positioniergenauigkeit des Ventilkegels ist deshalb relativ gering. Die Reibung kann sich sogar durch einen Verschleiß bis zu einer Blockierung vergrößern. Dieser Nachteil schließt den Einsatz eines solchen Ventils in vielen Fällen, insbesondere bei sehr hohen Sicherheits- und Reinheitsanforderungen, aus. Schließlich schränkt die Verwendung von Kunststoff für den Ventilkegel und den den Permanentmagneten führenden Abschnitt die Einsatzmöglichkeiten erheblich ein.

Der Erfindung liegt die Aufgabe zugrunde, ein Ventil zu schaffen, das nicht nur einen geringen Raumbedarf hat, sondern auch höchste Sicherheits- und Reinheitsanforderungen zu erfüllen vermag. Diese Aufgabe löst ein Ventil mit den Merkmalen des Anspruches 1.

Dadurch, daß die Baueinheit von Membranen getragen und gleitreibungsfrei geführt wird, ist jeglicher Verschleiß der mit dem Fluid in Berührung kommenden Teile vollständig ausgeschlossen. Außerdem halten die Membrane die gesamte Oberfläche der Baueinheit frei, wodurch in Verbindung mit der durch die Durchbrüche in den Membranen ermöglichten Anordnung der Baueinheit im Fluidstrom alle mit dem Fluid in Berührung kommende Flächen problemlos gereinigt und reingehalten werden können. Beim Durchspülen mit einer Reinigungsflüssigkeit liegen nämlich nicht nur die Begrenzungswände des Innenraums, sondern auch der Ventilkörper und das Führungs- und Betätigungsglied direkt im Strom des Spülmittels, und zwar mit ihrer gesamten Oberfläche. Da die Querschnittsform des Innenraums an die Außenform des Führungs- und Betätigungsgliedes weitgehend angepaßt werden kann, können auch Toträume vollständig vermieden werden.

Ein weiterer Vorteil des erfindungsgemäßen Ventils besteht darin, daß der Antrieb beinahe vollständig druckentlastet ist, weil im geöffneten Zustand die aus dem Ventilkörper und dem Führungs- und Betätigungsglied bestehende Baueinheit vollständig vom Fluid umgeben sind. Dies hat auch zur Folge, daß zu Schwingungen führende Störkräfte und die erforderlichen Betätigungs- und Stellkräfte klein sind, was sowohl eine kompakte Bauweise ermöglicht als auch dazu beiträgt, eine hohe Dynamik zu erreichen.

Da das Magnetsystem eine Verschiebung des Führungs- und Betätigungsgliedes in beiden Verschieberichtungen und auch jede beliebige Zwischenstellung ermöglicht, kann ein Energiespeicher, beispielsweise in Form einer Feder, im Innenraum des Ventils entfallen. Mit Hilfe des Magnetsystems können auch Schwingungen der aus dem Ventilkörper und dem Führungs- und Betätigungsglied bestehenden Baueinheit gedämpft werden, und zwar zum einen in Folge der bei Schwingungen im Magnetsystem erzeugten Wirbelströme, zum anderen durch eine Übertragung der den Schwingungen entgegengerichteten Betätigungskräfte. Die Möglichkeit, auf einen im Innenraum angeordneten Energiespeicher in Form einer Feder zu verzichten, ist vor allem für die Erfüllung sehr hoher Reinheitsanforderungen und einer nahezu vollständigen Kontaminationsfreiheit wichtig, da eine Feder zumindest an den Auflagestellen Abrieb erzeugt und außerdem in der Regel aus einem anderen Material bestehen muß als die übrigen Teile, was die chemische Resistenz beeinträchtigt. Das Magnetsystem wirkt ferner als Separator für ferritische Schmutzpartikel, falls solche vom Fluid transportiert werden sollten.

Schließlich ist das erfindungsgemäße Ventil auch als Regelventil mit beliebig einstellbaren Zwischenstellungen bestens geeignet. Es erfüllt deshalb auch die häufig gestellte Forderung einer Automanisierbarkeit.

Die Sicherheit gegen das Austreten des flüssigen oder gasförmigen Mediums ist extrem hoch, weil die für diese Sicherheit verantwortliche Dichtung, bei der es sich vorzugsweise um den äußeren Rand der einen Membrane handelt, nur statisch beansprucht ist, da sie zwischen den gegeneinander weisenden Endfläche zweier Teile des Gehäuses liegen kann, das nur aus diesen zwei Teilen zu bestehen braucht. Man kann sogar die Teile des Ventilgehäuses miteinander verschweißen. Aber auch ohne diese Verschweißung ist eine Sekundärdichtung nicht erforderlich.

Bei einer bevorzugten Ausführungsform weist das Magnetsystem mehrere in axialer Richtung nebeneinander angeordnete Ringmagnete in beiden Teilen auf, wobei mit der Vergrößerung der Anzahl der Ringmagnete die Steifigkeit der Kopplung zwischen beiden Teilen zunimmt. Bei der Verwendung von Permanentmagneten entfällt die Notwendigkeit, elektrische Energie zuführen zu müssen, was für explosionsgeschützte Ausführungsformen wichtig ist und eine Eigenerwärmung vermeidet. Statt der Magnetringe kann ein Magnetrohr mit mehreren Magnetpolen vorgesehen sein.

Besonders vorteilhaft ist eine Anordnung der beiden Teile des Magnetsystems gemäß Anspruch 5, wodurch nicht nur eine kompakte Bauweise erzielt wird, sondern auch in einfacher Weise das Ventilgehäuse vom Antriebsgehäuse getrennt werden kann, beispielsweise, um das eigentliche Ventil austauschen und die Antriebsvorrichtung wieder verwenden zu können.

Die Verschiebung des im Antriebsgehäuse vorzugsweise reibungsarm gelagerten Teils des Magnetsystems ist in verschiedener Weise möglich. Beispielsweise kann ein Kolben vorgesehen sein, der einfach oder doppelt wirkend sein kann. Ein solcher Kolben vermeidet eine Eigenerwärmung. Ist er einfach wirkend, dann kann mittels eines eine Rückstellkraft erzeugenden Energiespeichers, der ebenfalls im Antriebsgehäuse untergebracht ist, in einfacher Weise sichergestellt werden, daß bei einem Energieausfall das Ventil in seine Sicherheitsstellung gebracht wird. Für die Verschiebung des äußeren Teils des Magnetsystems kommt aber auch ein elektromagnetischer Antrieb in Frage, bei dem es sich auch um ein Linearmotorsystem mit einem Wanderfeld handeln kann.

Ein derartiges Linearmotorsystem eignet sich auch für die Verschiebung des Führungs- und Betätigungsgliedes. Vorteilhaft, da sehr kostengünstig, ist ferner eine Ausbildung der Antriebsvorrichtung gemäß Anspruch 7, bei der für eine Positionsänderung des Führungs- und Betätigungsgliedes nur die Erregerströme der Spulen verändert zu werden brauchen. Beispielsweise kann der Erregerstrom des einen Elektromagneten erhöht oder eingeschaltet und derjenige des anderen Elektromagneten verkleinert oder ausgeschalten. In vielen Fällen genügt aber eine gleiche Erregung beider Spulen, also ein Betrieb des Elektromagneten wie bei einem Vorhandensein einer einzigen Spule, wobei je nach Betätigungsrichtung der Erregerstrom in der einen oder anderen Richtung durch die Spulen fließt.

Wird, beispielsweise für Regelzwecke, ein Sensor benötigt, der die Position des Führungs- und Betätigungsgliedes zu erfassen vermag, dann kann letzteres beispielsweise mit einem metallischen Ring versehen sein, der im Wirkungsbereich eines Hall-Sensors liegt, der im Ventilgehäuse oder im Antriebsgehäuse angeordnet ist. Statt eines solchen Positionssensors oder zusätzlich zu einem solchen kann im Bedarfsfalle auch ein Drucksensor vorgesehen sein, der den Druck des Mediums erfaßt. Ferner kann das erfindungsgemäße Ventil auch mit einem Strömungssensor ausgerüstet werden. Hierzu kann beispielsweise im Führungs- und Betätigungsglied ein Bypass vorgesehen sein, der vom Medium durchströmt wird und in dem der Strömungssensor angeordnet ist. Die erforderlichen elektrischen Verbindungen mit diesem Strömungssensor können über die Membrane hergestellt werden, von denen auch, gegeneinander elektrisch isoliert, mehrere unmittelbar nebeneinander angeordnet sein können.

Im folgenden ist die Erfindung anhand von in der Zeichnung dargestellten Ausführungsbeispielen im einzelnen erläutert.

Es zeigen
- Fig. 1: einen Längsschnitt des ersten Ausführungsbeispieles,
- Fig. 2: eine Stirnansicht von dessen Antriebsgehäuse,
- Fig. 3: einen unvollständig dargestellten Längsschnitt des zweiten Ausführungsbeispieles,
- Fig. 4: einen unvollständig dargestellten Längsschnitt eines dritten Ausführungsbeispieles.

Ein Ventil zur Steuerung oder Regelung des Durchflusses eines flüssigen oder gasförmigen Mediums, bei dem es sich auch um ein Medium handeln kann, wie es bei der Halbleiterfertigung sowie in der Bio- und Medizintechnik benötigt wird, und das höchste Anforderungen an die Sicherheit und die Reinheit erfüllt, weist ein zweiteiliges Ventilgehäuse auf, dessen erster Teil 1 mit einer zentralen Durchgangsbohrung versehen ist, welche einen Einlaßkanal 2 und einen Ventilsitz 3 bildet, von dem aus die Durchgangsbohrung sich gegen den zweiten Teil 4 hin trichterförmig erweitert. Der zweite Teil 4 des Ventilgehäuses schließt sich gleichachsig an diejenige Stirnfläche des ersten Teiles 1 an, in der die Mündungsöffnung der trichterförmigen Erweiterung liegt, und zwar mittels eines Ringflansches 5, der am einen Ende eines dünnwandigen, rohrförmigen Abschnittes 6 des zweiten Teiles 4 vorgesehen ist. Der Innendurchmesser dieses rohrförmigen Abschnittes 6 ist an den Durchmesser der Mündungsöffnung des trichterförmig erweiterten Endabschnittes der Durchgangsbohrung des ersten Teiles 1 angepaßt. An dem dem ersten Teil 1 abgekehrten Ende des rohrförmigen Abschnittes 6 ist der Innendurchmesser des zweiten Teiles 4 trichterartig bis auf den für einen Auslaßkanal 7 erforderlichen Querschnitt reduziert.

Zwischen dem Ringflansch 5 und der ihm zugekehrten Stirnfläche des ersten Teiles 1 des Ventilgehäuses liegt eine Ringdichtung 8, die im Ausführungsbeispiel ebenso wie das Ventilgehäuse aus Metall besteht. Der Ringflansch 5 und ein entsprechender Ringflansch 9 des ersten Teiles 1 sind mittels einer Überwurfmutter 10 zentriert und zusammengespannt, die mit ihrem Kopf am Ringflansch 9 anliegt und mit ihrem Außengewinde in eine Gewindebohrung eines Spannkörpers 11 eingreift, der nicht nur den Ringflansch 5 hintergreift, sondern in seiner zentralen Durchgangsbohrung einen sich an den Ringflansch 5 anschließenden Endabschnitt des rohrförmigen Abschnittes 6 aufnimmt.

Im Inneren des rohrförmigen, aus einem austenitischen Material bestehenden Abschnittes 6 ist ein zylindrisches Führungs- und Betätigungsglied 12 angeordnet, das aus strömungstechnischen Gründen an beiden Enden halbkugelähnlich abgerundet ist. In eine zentrale Bohrung dieses aus austenitischem Metall bestehenden Führungs- und Betätigungsgliedes ist an dem dem Ventilsitz 3 zugekehrten Ende ein Verbindungszapfen eines mit dem Ventilsitz 3 zusammenwirkenden, kegelförmigen Ventilkörpers 13 eingesetzt. Dieser Verbindungszapfen durchdringt eine zentrale Öffnung einer mit Durchbrechungen versehenen Membrane 14, deren äußerer Rand die Ringdichtung 8 bildet und deren innerer Rand zwischen dem Ventilkörper 13 und dem Führungs- und Betätigungsglied 12 eingespannt ist. Eine zweite, ebenfalls mit Durchbrüchen versehene Membrane 15 ist zentral mit dem anderen Ende des Führungs- und Betätigungsgliedes 12 verbunden und mit ihrem äußeren Rand am zweiten Teil 4 des Ventilgehäuses abgestützt, und zwar am Übergang von dem rohrförmigen Abschnitt 6 zum Auslaßkanal 7. Die beiden Membrane 14 und 15 halten das Führungs- und Betätigungsglied 12 mit hoher Präzision in einer zum rohrförmigen Abschnitt 6 konzentrischen Lage, so daß zwischen dessen Innenwandung und der Außenmantelfläche des Führungs- und Betätigungsgliedes ein geringer Luftspalt 16 vorgesehen werden kann. Die axiale Verschiebung des Führungs- und Betätigungsgliedies 12, welche die Membrane 14 und 15 zulassen, ist völlig ausreichend, um den Ventilkörper 13 zwischen seiner Schließstellung und seiner Öffnungsstellung zu bewegen.

Das Führungs- und Betätigungsglied 12 ist mit einer zu seiner Längsachse konzentrischen, nach außen offenen, breiten Ringnut 17 versehen, in der im Ausführungsbeispiel vier ringförmige Permanentmagnete axial nebeneinander und konzentrisch zur Längsachse angeordnet sind. Die beiden mittleren Permanentmagnete 18 haben ihre Pole an den Stirnfläche, und zwar so, daß ungleichnamige Pole aneinander anliegen. Die beiden die Permanentmagnete 18 zwischen sich aufnehmenden Permanentmagnete 19 könnten in gleicher Weise wie die Permanentmagnete 18 magnetisiert sein. Im Ausführungsbeispiel liegen ihre Pole jedoch im Bereich der zylindrischen Mantelflächen, weshalb zwischen ihnen und den Permanentmagneten 18 je ein Flußleitblech 20 liegt. Die Ringnut 17 ist nach außen flüssigkeits- und gasdicht mittels einer metallischen Hülse 21 verschlossen, so daß das Medium nicht in Berührung mit den Permanentmagneten 18 und 19 kommen kann. Die Hülse 21 überdeckt außerdem gas- und flüssigkeitsdicht einen Metallring 22, der ebenfalls in das Führungs- und Betätigungsglied 12 konzentrisch eingelassen ist und auf den ein als Hall-Sensor ausgebildeter Positionssensor 23 ausgerichtet ist, der in eine radiale Bohrung des Spannkörpers 11 eingesetzt ist, um die Position des Führungs- und Betätigungsgliedes 12 zu detektieren.

Sowohl die Außenmantalfläche des Führungs- und Betätigungsgliedes 12 als auch die den Innenraum des Ventilgehäuses begrenzenden Wände sind poliert, was wegen der einfachen geometrischen Formen ohne Schwierigkeiten möglich ist. Daher bereitet auch die Reinigung des Ventils mit Hilfe eines Spülmittels keine Schwierigkeiten, zumal keine Toträume vorhanden sind und alle Oberflächen in der Strömung des Spülmittels liegen.

Das Führungs- und Betätigungsglied 12 besteht aus zwei zentral miteinander verschraubten und anschließend gasdicht verschweißten Teilen, damit die Permanentmagnete 18 und 19 in die Ringnut 17 eingebracht werden können. Aus magnetischen Gründen handelt es sich bei dem für die beiden Teile verwendeten Metall ebenso wie beim zweiten Teil 4 des Ventilgehäuses und der Hülse 21 um einen austenitischen Werkstoff.Aus Gründen einer möglichst geringen Masse des Führungs- und Betätigungsgliedes 12 ist die Ringnut 17 möglichst groß ausgeführt und der verbleibende Raum mit einer Kunststoffvergußmasse gefüllt.

Über das Ventilgehäuse ist spielfrei und konzentrisch zu dessen Längsachse ein als Ganzes mit 24 bezeichnetes Antriebsgehäuse geschoben, das eine quadratische Außenkontur hat und sich außen stufenlos an den Spannkörper 11 anschließt, der ebenfalls eine quadratische Außenkontur hat. Das Antriebsgehäuse 24 besteht aus einer auf dem zweiten Teil 4 des Ventilgehäuses 1 im Bereich des Auslaßkanales 7 zentriert angeordneten Endplatte 25 und einem zwischen dieser und dem Spannkörper 11 liegenden Buchse 26, die beide mittels diagonal liegender Schrauben 27 zusammengespannt sind. Zwei ebenfalls diagonal angeordnete Schrauben 27' durchdringen das Antriebsgehäuse 24 in dessen beiden anderen Eckbereichen bis zu Gewindebohrungen im Spannkörper 11 und spannen das Ventilgehäuse sowie das Antriebsgehäuse 24 lösbar zusammen. In der Buchse 26 ist eine Kugelmanschette 28 angeordnet, mittels deren äußerst reibungsarm ein hohler Kolben 29 relativ zum Ventilgehäuse längsverschiebbar geführt ist. Mehrere über den Umfang verteilt angeordnete Schraubendruckfedern 30 stützen sich einerseits an der Endplatte 25 und andererseits an dem dieser zugekehrten Ende des Kolbens 29 ab. Die der Endplatte 25 abgewandte Stirnfläche des Kolbens 29, an der ein im Querschnitt U-artiges Dichtungselement 31 anliegt, ist mit Druckluft beaufschlagbar. Daher ist der Spannkörper 11 mit einer Luftanschlußbohrung 32 versehen, deren Mündungsöffnung auf das Dichtungselement 31 ausgerichtet ist. O-Ringe 33 zwischen den aneinander anliegenden Flächen des Spannkörpers 11 einerseits und der Buchse 26 sowie dem rohrförmigen Abschnitt 6 andererseits verhindern ein Entweichen der Luft aus dem Druckraum 34.

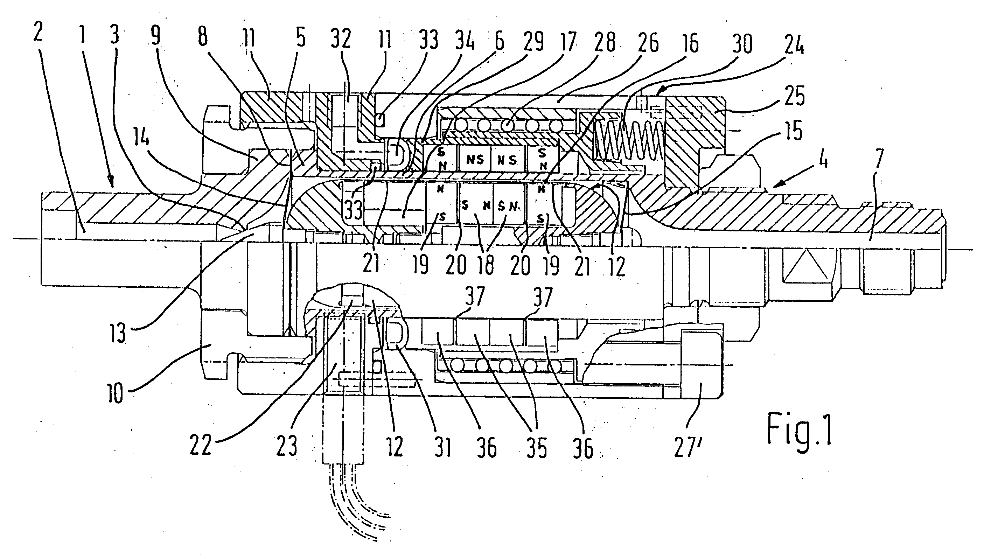

Im Inneren des Kolbens 29 sind konzentrisch zu dessen Längsachse und damit auch konzentrisch zu den Permanentmagneten 18 und 19 Ringmagnete angeordnet, bei denen es sich im Ausführungsbeispiel ebenfalls um Permanentmagnete handelt. Wie bei dem Führungs- und Betätigungsglied 12 sind die beiden mittleren Permanentmagnete 35 so magnetisiert, daß ihre Pole in den Stirnflächen liegen. Die Lage der Pole ist aber, wie Fig. 1 zeigt, im Vergleich zur Lage der Pole der Permanentmagnete 18 vertauscht. Die Permanentmagnete 35 liegen zwischen zwei Permanentmagneten 36, deren Pole in den Mantelflächen liegen, wobei die Anordnung so getroffen ist, daß den Polen der Permanentmagnete 19 gleichnamige Pole gegenüberstehen. Flußleitplatten 37 trennen die Permanentmagnete 36 von den Permanentmagneten 35.

Wie Fig. 1 zeigt, sind die Permanentmagnete 35 so im Kolben 29 angeordnet, daß sie dann, wenn der Druckraum 34 drucklos ist, der Kolben 29 also bei einer Blickrichtung gemäß Fig. 1 seine linke Endlage einnimmt und außerdem der Ventilkörper 13 am Ventilsitz 3 anliegt, gegenüber den Permanentmagneten 18 etwas gegen den Spannkörper 11 versetzt sind. Dadurch wird auf das Führungs- und Betätigungsglied 12 rein magnetisch eine axiale Kraftkomponente ausgeübt, welche den Ventilkörper 11 mit der erforderlichen Schließkraft in Anlage am Ventilsitz 3 hält. Wird der Kolben 29 mit Druckluft beaufschlagt, wodurch er sich entgegen der Kraft der Schraubendruckfedern 30 bei einer Blickrichtung gemäß Fig. 1 nach rechts bewegt, dann hat das den rohrförmigen Abschnitt 6, den Luftspalt 16 und die Hülse 21 durchgreifende Magnetfeld zur Folge, daß das Führungs- und Betätigungsglied 12 mitgeschleppt wird, weshalb durch diese Kolbenverschiebung der Ventilkörper 13 vom Ventilsitz 3 abgehoben wird. Die Kopplung zwischen den Permanentmagneten 35 und 18 ist dabei um so steifer, je mehr von diesen Ringmagneten nebeneinander angeordnet sind.

Die Permanentmagnete 36 üben zusammen mit den Permanentmagneten 19 auf das Führungs- und Betätigungsglied 12 eine zentrierende Kraft aus, so daß die Membrane 14 und 15 weitgehend von Querkräften freigehalten werden, welche durch Unsymmetrien auftreten können.

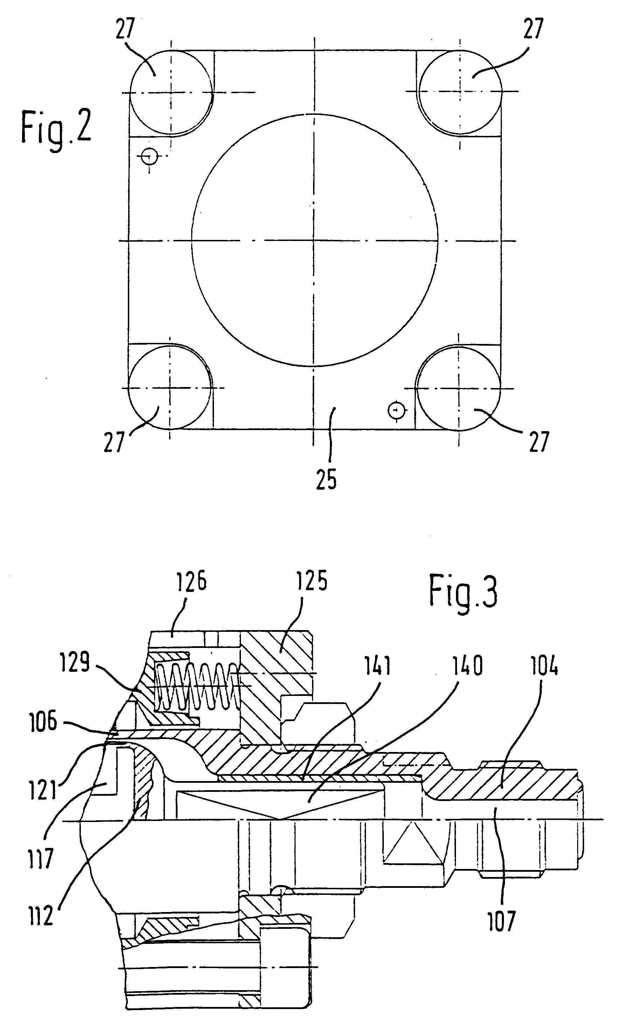

Das in Fig. 3 dargestellte Ausführungsbeispiel unterscheidet sich von demjenigen gemäß den Fig. 1 und 2 in konstruktiver Hinsicht nur durch eine andere Ausbildung der Führung des Führungs- und Betätigungsgliedes 112 im Ventilgehäuse. Die Beschreibung beschränkt sich deshalb auf diese Abwandlung. Wegen der übrigen Einzelheiten wird auf die Ausführungen zu dem ersten Ausführungsbeispiel Bezug genommen. Zur Erleichterung des Verständnisses sind ferner für sich entsprechende Teile um 100 größere Bezugszahlen verwendet.

Da das Führungs- und Betätigungsglied 112 nicht mit Hilfe von Membranen im Inneren des Ventilgehäuses gelagert und geführt ist, weist das in Fig. 3 dargestellte Ende des Führungs- und Betätigungsgliedes 112 einen stabförmigen Fortsatz 140 auf, der koaxial zum Führungs- und Betätigungsglied 112 angeordnet ist und ein Mehrkantprofil, im Ausführungsbeispiel ein Dreikantprofil, hat. Dieser stabförmige Fortsatz 140 ist spielfrei in einer konzentrisch zur Längsachse des Führungs- und Betätigungsgliedes 112 liegenden Führungsbuchse 141 längsverschiebbar geführt. Zur Aufnahme dieser Buchse 141 ist der zweite Teil 104 des Ventilgehäuses in dem sich an den rohrförmigen Abschnitt 106 anschließenden, im Durchmesser verkleinerten Abschnitt mit einer entsprechenden Erweiterung des ihn durchdringenden Kanales 107 versehen. Wie Fig. 3 zeigt, ist die Länge der Führungsbuchse 141 so gewählt, daß das Führungs- und Betätigungsglied 112 den gewünschten Hub ausführen kann. In derjenigen Endstellung, die dem vollständig geöffneten Zustand des Ventils entspricht, findet der stabförmige Fortsatz 140 im Ausführungsbeispiel Anschlag an einer Schulter des zweiten Teils 104.

Die Führungsbuchse 141, statt der auch eine andere Führung, insbesondere eine Kugelmanschette, vorgesehen sein könnte, besteht aus ferritischem Material. Ebenfalls aus ferritischem Material besteht der als Führungszapfen dienende, stabförmige Fortsatz 140 und der mit ihm einstückig ausgebildete Teil des Führungs- und Betätigungsgliedes 112. Dessen anderer Teil und die Hülse 121 bestehen hingegen aus einem austenitischen Stahl.

Der Vorteil dieses Ausführungsbeispieles gegenüber demjenigen gemäß den Fig. 1 und 2 besteht darin, daß ein beliebig großer Hub des Führungs- und Betätigungsgliedes 112 verwirklicht werden kann, wie er beispielsweise bei Regelventilen mit einem Feinregelbereich erwünscht oder erforderlich sein kann. Sofern der nicht ganz vermeidbare Abrieb zwischen dem stabförmigen Fortsatz 140 und der Führungsbuchse 141 störend sein sollte, wird der vom zweiten Teil 104 des Ventilgehäuses gebildete Kanal 107 als Einlaßkanal benutzt. Die abgeriebenen Partikel kommen dann mit dem Medium in den Wirkungsbereich der Permanentmagnete des Führungs- und Betätigungsgliedes 112 sowie des Kolbens 129. Da diese Partikel aus ferritischem Material bestehen, werden sie von diesen Magneten festgehalten. Selbstverständlich können der Kanal 107 und der Kanal 102 auch so angeordnet sein, daß beide dem Ventilgehäuseteil 1 bzw. 101 angehören und das Führungs- und Betätigungsglied lotrecht zur Hauptströmungsrichtung bewegt wird.

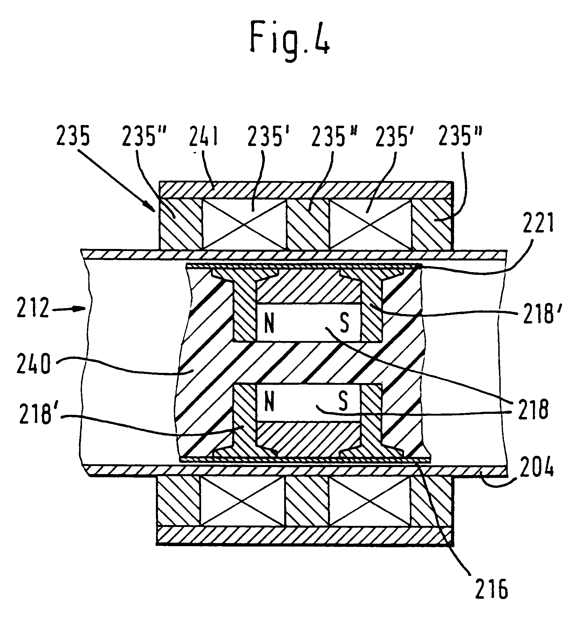

Das in Fig. 4 unvollständig dargestellte dritte Ausführungsbeispiel unterscheidet sich von den davor beschriebenen Ausführungsbeispielen nur durch eine andere Ausbildung der Magnetkupplung und der Antriebsvorrichtung. Daher sind im folgenden nur diese Teile im einzelnen erläutert. Die übrigen Teile können wie bei dem ersten oder dem zweiten Ausführungsbeispiel ausgebildet sein, weshalb insoweit auf die Erläuterungen zu diesen beiden Ausführungsbeispielen Bezug genommen wird.

Das Führungs- und Betätigungsglied 212 enthält zwar wie die Führungs- und Betätigungsglieder 12 und 112 ein Permanentmagnetsystem zur Bildung des einen Teils der magnetischen Kupplung. Dieses Permanentmagnetsystem weist jedoch einen konzentrisch zu der in der Verschieberichtung verlaufenden Längsachse liegenden, hohlzylindrischen Permanentmagneten 218 auf, an dessen beide Stirnflächen sich je ein scheibenförmiger Polschuh 218' aus ferritischem Material anschließt. Diese beiden gleich ausgebildeten, scheibenförmigen Polschuhe 218' haben eine in Längsrichtung des Führungs- und Betätigungsgliedes 212 verbreiterte äußere Randzone, deren Außenmantelfläche an der dünnen metallischen Hülse 221 anliegt, die aus austenitischem Material besteht und den das Magnetsystem enthaltenden Innenraum des Führungs- und Betätigungsgliedes 212 nach außen flüssigkeits- und gasdicht verschließt. Die nicht vom Magnetsystem ausgefüllten Teile des Innenraumes des Führungs- und Betätigungsgliedes 212 sind mit einem Kunststoff, beispielsweise einem Gießharz 240, ausgefüllt.

Am zweiten Teil 204 des Ventilgehäuses, das in dem das Führungs- und Betätigungsglied 212 konzentrisch unter Bildung eines sehr geringen Luftspaltes 216 umgebenden Abschnitt die Form eines dünnwandigen Rohres hat und aus einem austenitischen Material besteht, liegt die relativ zum Ventilgehäuse ortsfeste Antriebsvorrichtung für das Führungs- und Betätigungsglied 212 an. Die Antriebsvorrichtung weist zwei in der Verschieberichtung des Führungs- und Betätigungsgliedes 212 im Abstand voneinander angeordnete Ringspulen 235' eines Elektromagneten 235 auf. Den Zwischenraum zwischen diesen beiden Ringspulen 235' füllt ein Flußleitring 235'' aus, der einerseits an der Außenmantelfläche des zweiten Teiles 204 des Ventilgehäuses und andererseits an der Innenmantelfläche eines aus ferritischem Material bestehenden Jochrohres 241 vollflächig anliegt. Entsprechende Flußleitringe 235'' liegen an den einander abgekehrten Stirnflächen der Ringspulen 235', dem zweiten Teil 204 des Ventilgehäuses und dem Jochrohr 241 an.

Sind, wie im Ausführungsbeispiel, die beiden Polschuhe 218' in einer Mittelstellung des Führungs- und Betätigungsgliedes 212 auf die eine bzw. andere Ringspule 235' ausgerichtet, dann kann das Führungs- und Betätigungsglied 212 mit Hilfe des mittels der beiden Ringspulen 235' erzeugbaren magnetischen Flusses, der sich über die Polschuhe 218' schließt, im Zusammenwirken mit dem vom Permanentmagneten 218 erzeugten magnetischen Fluß wahlweise in der einen oder anderen axialen Richtung verschoben werden, je nachdem, ob der Erregerstrom durch die Ringspulen in der einen oder anderen Richtung fließt.

Alle in der vorstehenden Beschreibung erwähnten sowie auch die nur allein aus der Zeichnung entnehmbaren Merkmale sind als weitere Ausgestaltungen Bestandteile der Erfindung, auch wenn sie nicht besonders hervorgehoben und insbesondere nicht in den Ansprüchen erwähnt sind.

## Patentansprüche

1. Ventil mit
a) einem Ventilgehäuse (1, 4; 104, 106; 204), dessen Innenraum, durch den ein Fluid hindurchleitbar ist, einen Einlaßkanal (2) und einen Auslaßkanal (7; 107) aufweist sowie ein Führungs- und Betätigungsglied (12; 112; 212) umschließt, das als eine vom Fluid umströmbare Kapsel ausgebildet ist,
b) einem am einen Ende des Führungs- und Betätigungsgliedes (12; 112; 212) vorgesehenen Ventilkörper (13) und einem diesem zugeordneten Ventilgegenkörper (3),
c) einer außerhalb der Kapsel angeordneten Betätigungsvorrichtung (26, 29, 30, 34; 126, 129; 235, 241) für eine Verschiebung des mit dem Ventilkörper (13) eine vorzugsweise auf jede beliebige Zwischenstellung positionierbare Baueinheit (12, 13) bildenden Führungs- und Betätigungsgliedes (12; 112; 212) und
d) einem als Magnetkupplung ausgebildeten Magnetsystem (18, 35; 118; 235), mit dessen Hilfe die ausschließlich magnetische Kraft der Betätigungsvorrichtung (26, 29, 30, 34; 126, 129; 235, 242) auf das Führungs- und Betätigungsglied (12; 112; 212) übertragen wird und dessen permanentmagnetische eine Hälfte (18; 218) von der Kapsel umhüllt ist sowie parallel zu deren Bewegungsrichtung an der Kapseloberfläche magnetische Pole mindestens eines Polpaares bildet,
dadurch gekennzeichnet, daß insbesondere für hohe Reinheits- und/oder Sicherheitsanforderungen die mit ihrer gesamten Oberfläche direkt im Fluidstrom liegende Kapsel gasdicht ausgebildet ist und die Baueinheit (12, 13) gleitreibungsfrei von wenigstens zwei in der Bewegungsrichtung der Baueinheit (12, 13) im Abstand voneinander angeordneten Membranen (14, 125) getragen ist, die mit Durchbrüchen für dem Durchtritt des Fluids versehen sind und deren äußerer Rand mit dem Ventilgehäuse (1, 4; 104, 106; 204) verbunden ist.

2. Ventil nach Anspruch 1, dadurch gekennzeichnet, daß das Ventilgehäuse (1, 4; 204) zumindest auf einem Teil seiner Länge von einer die Betätigungsvorrichtung bildenden Antriebsvorrichtung umgeben ist, welche dem anderem Teil (35; 235) des Magnetsystems aufweist, mittels dessen die Wand des Ventilgehäuses (1, 4; 204) durchgreifendem Magnetfeld auf das Führungs und Betätigungsglied (12; 112) eine Kraft ausübbar ist, welche zumindest eine Komponente in der Bewegungsrichtung des Führungs- und Betätigungsgliedes (12; 112; 212) hat.

3. Ventil nach Anspruch 1 oder 2, dadurch gekennzeichnet, daß beide Teile des Magnetsystems wenigstens einen, vorzugsweise mehrere in der Bewegungseinrichtung des Führungs- und Betätigungsgliedes (12;112) nebeneinander angeordnete Ringmagnete (18,35) aufweisen, von denen auch diejenigen der Antriebsvorrichtung vorzugsweise Permanentmagnete sind.

4. Ventil nach einem der Ansprüche 1 bis 3, dadurch gekennzeichnet, daß der das Führungs- und Betätigungsglied (12;112) umgebende Teil des Magnetsystems in einem Gehäuse (24;125,126) reibungsarm verschiebbar angeordnet ist.

5. Ventil mach Anspruch 4, dadurch gekennzeichent, daß das Gehäuse (24;125,126) ein vom Ventilgehäuse (1,4,5,6) trennbares und dieses wenigstens auf einem Teil seiner Länge im Abstand umgebendes Antriebsgehäuse (24;125,126) ist.

6. Ventil nach Anspruch 4 oder 5, gekennzeichnet durch einen im Antriebsgehäuse (24) durch Fluide oder manuell, vorzugsweise reibungsarm, verschiebbar gelagerten Betätigungskolben (29;129).

7. Ventil nach einem der Ansprüche 1 bis 5, dadurch gekennzeichnet, daß die Antriebsvorrichtung wenigsten zwei Spulen (235') aufweist, die ortsfest sowie konzentrisch zum Führungs- und Betätigungsglied (212) und im dessen Bewegungsrichtung gegeneinander versetzt angeordnet sind und deren Erregerströme veränderbar sind.

8. Ventil nach einem der Ansprüche 2 bis 6, dadurch gekennzeichnet, daß als Mittel zur reibungsarmen Lagerung der Antriebsvorrichtung im Antriebsgehäuse (24;125,126) eine Kugelmanschette (28) vorgesehen ist.

9. Ventil nach einem der Ansprüche 1 bis 8, dadurch gekennzeichnet, daß die metallischen Membrane (15) als gegeneinander isolierte elektrische Verbindungsleitungen zwischen der Baueinheit und dem Ventilgehäuse vorgesehen sind.

10. Ventil nach einem der Ansprüche 1 bis 9, dadurch gekennzeichnet, daß das Führungs- und Betätigungsglied (112;212) statt der Membrane an seinem dem Ventilkörper abgekehrten Ende einen gleichachsig angeordneten Führungszapfen (140) aufweist, der in einer Führung (141) des Ventilgehäuses längsverschiebbar geführt ist.

11. Ventil nach Anspruch 10, dadurch gekennzeichnet, daß die Führung im Einlaßkanal (107) vorgesehen ist und sowohl der Führungszapfen (140) als auch eine diesen aufnehmende Führungsbuchse (141) aus ferritischem Material besteht.

12. Ventil nach einem der Ansprüche 1 bis 11, gekennzeichnet durch eine sich abstoßende, radial verlaufende Magnetfelder erzeugende magnetische Führung (19,36) für das Führungs- und Betätigungsglied (12;112;212).

13. Ventil nach einem der Ansprüche 1 bis 12, gekennzeichnet durch einen die Positon der aus dem Ventilkörper (13) und dem Führungs- und Betätigungsglied (12;112;212) bestehenden Baueinheit erfassenden Sensor (23).

14. Ventil nach einem der Ansprüche 1 bis 13, gekennzeichnet durch einen den Druck, den Durchfluß oder die Temperatur des flüssigen oder gasförmigen Mediums erfassenden Sensor.

15. Ventil nach einem der Ansprüche 1 bis 14, gekennzeichnet durch einen innerhalb des Führungs- und Betätigungsgliedes (12;112;212) in einem Bypass angeordneten Strömungssensors, dessen elektrische Verbindungsleitungen durch Membrane gebildet sind.

## Claims

1. Valve with
a) a valve housing (1, 4; 104, 106; 204) of which the interior space, through which a fluid can be passed, comprises an inlet duct (2) and an outlet duct (7; 107) and also surrounds a guiding and operating member (12; 112; 212) which is formed as a capsule around which the fluid can flow,
b) a valve body (13) provided at one end of the guiding and operating member (12; 112; 212) and an oppose valve body (3) associated therewith,
c) an operating device (26, 29, 30, 34; 126, 129; 235, 241) disposed outside the capsule for a displacement of the guiding and operating member (12; 112; 212) which forms, with the valve body (13), a constructional unit (12, 13) which can preferably be positioned in any desired intermediate position, and
d) a magnet system (18, 35; 118; 235) formed as a magnetic coupling with the aid of which the exclusively magnetic force of the operating device (26, 29, 30, 34; 126, 129; 235, 242) is transferred to the guiding and operating member (12; 112; 212), and of which one permanently magnetic half (18; 218) is enveloped by the capsule and forms magnetic poles of at least one pair of poles, on the surface of the capsule, parallel to the direction of movement thereof,
characterized in that, particularly for high cleanliness and/or safety requirements, the capsule, which is disposed with its entire surface directly in the fluid flow, is formed so as to be gas-tight and the constructional unit (12, 13) is carried smoothly, by at least two diaphragms (14, 125) which are spaced apart in the direction of movement of the constructional unit (12, 13) and are provided with through-holes for the passage of the fluid, and the outer edges of which are connected to the valve housing (1, 4; 104, 106; 204).

2. Valve according to Claim 1, characterized in that the valve housing (1, 4; 204) is surrounded, at least for a portion of its length, by an actuator device forming the operating device and comprising the other portion (35; 235) of the magnet system, by means of the magnetic field of which, which field roaches through the wall of the valve housing (1, 4; 204), a force having at least one component in the direction of movement of the guiding and operating member (12; 112; 212) can be exerted on the guiding and operating member (12; 112).

3. Valve according to Claim 1 or Claim 2, characterized in that both portions of the magnet system comprise at least one, preferably a plurality, of ring magnets (18, 35) which are disposed side by side in the direction of movement of the guiding and operating member (12; 112), and of which those of the actuator device are also preferably permanent magnets.

4. Valve according any one of Claims 1 to 3, characterized in that the portion of the magnet system which surrounds the guiding and operating member (12; 112) is arranged for moving with low friction in a housing (24; 125, 126).

5. Valve according to Claim 4, characterized in that the housing (24; 125, 126) is an actuator housing (24; 125, 126) separable from the valve housing (1, 4, 5, 6) and surrounding the latter with clearance for at least a portion of its length.

6. Valve according to Claim 4 or Claim 5, characterized by an operating piston (29; 129) mounted for movement by means of fluid or manually, preferably with low friction.

7. Value according to any one of Claims 1 to 5, characterized in that the actuator device comprises at least two coils (235') which are stationary as well as concentric with the guiding and operating member (212) and offset from one another in the direction of movement thereof, and the excitation currents of which are variable.

8. Valve according to any one of Claims 2 to 6, characterized in that a ball-bearing collar (28) is provided as the means for the low-friction mounting of the actuator device in the actuator housing (24; 125, 126).

9. Valve according to any one of Claims 1 to 8, characterized in that the metal diaphragms (15) are provided as electrical connection leads, insulated from one another, between the constructional unit and the valve housing.

10. Valve according to any one of Claims 1 to 9, characterized in that the guiding and operating member (112; 212) comprises, instead of the diaphragms, at its end facing away from the valve body, a guide pin (140) disposed on the same axis and guided for longitudinal movement in a guide (141) of the valve housing.

11. Valve according to Claim 10, characterized in that the guide is provided in the inlet duct (107) and both the guide pin (140) and a guide sleeve (141) housing the latter, are made of ferric material.

12. Valve according to any one of Claims 1 to 11, characterized by a magnetic guide (19, 36) for the guide and operating member (12; 122; 212), producing radially-extending, repellent magnetic fields.

13. Valve according to any one of Claims 1 to 12, characterized by a sensor (23) which detects the position of the constructional unit consisting of the valve body (13) and the guiding and operating member (12; 112; 212).

14. Valve according to any one of Claims 1 to 13, characterized by a sensor detecting the pressure, the flow-rate or the temperature of the liquid or gaseous medium.

15. Valve according to any one of Claims 1 to 14, characterized by a flow sensor which is disposed in a bypass inside the guiding and operating member (12; 112; 212.

## Revendications

1. Valve présentant
a) une cage de valve (1, 4 ; 104, 106 ; 204) dont l'intérieur permettant à un fluide de passer directement, présente un conduit d'admission (2) et un conduit de sortie (7 ; 107) et entoure un élément de guidage et de commande (12 ; 112 ; 212) qui est conçu comme une capsule pouvant être contournée par le fluide.
b) un corps de valve (13) prévu à l'une des extrémités de l'élément de guidage et de commande (12 ; 112 ; 212) et un corps de valve opposé (3) correspondant au corps de valve (13),
c) un dispositif de commande (26, 29, 30, 34 ; 126, 129 ; 235, 241) disposé à l'extérieur de la capsule et commandant un déplacement de l'élément de guidage et de commande (12 ; 112 ; 212) formant avec le corps de la valve (13) une unité modulaire (12, 13) pouvant être positionnée de préférence sur toute position intermédiaire et
d) un système magnétique (18, 35 ; 118 ; 235) conçu comme coupleur magnétique, à l'aide duquel la force exclusivement magnétique du dispositif de commande (26, 29, 30, 34 ; 126, 129 ; 235, 242) est transmise à l'élément de guidage et de commande (12 ; 235, 242) et dont une moitié (18 ; 218) magnétique en permanence est enveloppée par la capsule et forme sur la surface de la capsule, parallèlement à la direction du mouvement de la capsule, des pôles magnétiques d'au moins une paire de pôles, caractérisée en ce que, notamment pour des exigences élevées de pureté et/ou de sécurité, la capsule, se trouvant directement par toute sa surface dans le courant du fluide, est conçue de manière étanche au gaz et en ce que l'unité modulaire (12, 13) est portée sans frottement de glissement par au moins deux membranes espacées l'une de l'autre, dans la direction du mouvement de l'unité modulaire (12, 13), pourvues d'ouvertures pour le passage du fluide et dont le bord externe est relié à la cage de la valve (1, 4 ; 104, 106 ; 204).

2. Valve selon la revendication 1, caractérisée en ce que la cage de la valve (1, 4 ; 204) est entourée, au moins sur une partie de sa longueur, par un mécanisme moteur formant le dispositif de commande et présentant l'autre partie (35 ; 235) du système magnétique à l'aide du champ magnétique duquel, traversant la paroi de la cage de la valve (1, 4 ; 204) peuts'exercer sur l'élément de guidage et de commande (12 ; 112) une force qui a au moins une composante dans la direction du mouvement de l'élément de guidage et de commande (12 ; 112 ; 212).

3. Valve selon la revendication 1 ou 2, caractérisée en ce que les deux parties du système magnétique présentent au moins un, de préférence plusieurs aimants toriques, disposés l'un à côté de l'autre dans la direction du mouvement de l'élément de guidage et de commande (12 ; 112), aimants dont également ceux du mécanisme moteur sont de préférence des aimants permanents.

4. Valve selon l'une des revendications 1 à 3, caractérisée en ce que la partie du système magnétique entourant l'élément de guidage et de commande (12 ; 112) est disposée dans un boîtier (24 ; 125, 126) tout en pouvant se déplacer avec peu de frottements.

5. Valve selon la revendication 4, caractérisée en ce que le boîtier (24; 125, 126) est un boîtier de commande (24 ; 125, 126) pouvant être séparé de la cage de la valve (1, 4, 5, 6) et entourant celle-ci à une certaine distance au moins sur une partie de sa longueur.

6. Valve selon la revendication 4 ou 5, caractérisée par un piston de commande (29 ; 129) pouvant être déplacé dans le boîtier de commande (24), de préférence avec peu de frottements, par des fluides ou manuellement.

7. Valve selon l'une des revendications 1 à 5, caractérisée en ce que le mécanisme moteur présente au moins deux bobines (235') qui sont disposées, de manière fixe et concentrique par rapport à l'élément de guidage et de commande (212) et sont mutuellement décalées dans sa direction de mouvement et dont les courants d'excitation peuvent être modifiés.

8. Valve selon l'une des revendications 2 à 6, caractérisée en ce qu'une manchette sphérique (28) est prévue comme moyen permettant de loger avec peu de frottements le mécanisme moteur dans le boîtier de commande (24 ; 125, 126).

9. Valve selon l'une des revendications 1 à 8, caractérisée en ce que les membranes métalliques (15) sont prévues comme des lignes électriques isolées l'une de l'autre, assurant une connexion entre l'unité modulaire et la cage de la valve.

10. Valve selon l'une des revendications 1 à 9, caractérisée en ce que l'élément de guidage et de commande (112 ; 212) présente à la place de la membrane, à son extrémité éloignée du corps de la valve, un tenon de guidage (140) disposé sur le même axe et qui est guidé dans un guide (141) de la cage de la valve selon un déplacement longitudinal.

11. Valve selon la revendication 10, caractérisée en ce que le guide est prévu dans le canal d'admission (107) et que le tenon de guidage (140) ainsi qu'une cage de guidage (141) logeant celui-ci sont tous deux réalisés dans un matériau ferritique.

12. Valve selon l'une des revendications 1 à 11, caractérisée par un guidage magnétique (19, 36) produisant des champs magnétiques radiaux et se repoussant pour l'élément de guidage et de commande (12 ; 112 ; 212).

13. Valve selon l'une des revendications 1 à 12, caractérisée par un capteur (23) enregistrant la position de l'unité modulaire se composant du corps de la valve (13) et de l'élément de guidage et de commande (12 ; 112 ; 212).

14. Valve selon l'une des revendications 1 à 13, caractérisée par un capteur enregistrant la pression, le débit ou la température du milieu liquide ou gazeux.

15. Valve selon l'une des revendications 1 à 14, caractérisée par un capteur d'écoulement disposé à l'intérieur de l'élément de guidage et de commande (12 ; 112 ; 212) dans une dérivation et dont les lignes de connexion électriques sont formées par des membranes.
